# EUROPÄISCHE PATENTSCHRIFT

(11) **EP 2 251 580 B1**
(45) Veröffentlichungstag und Bekanntmachung des Hinweises auf die Patenterteilung: **15.10.2014**
(21) Anmeldenummer: 10159834.0
(22) Anmeldetag: 14.04.2010
(51) Int. Cl.: F16L 11/08, B32B 1/08, B32B 27/12

(54) **Schlauch, insbesondere Bremsschlauch, mit integierter Wasser- und Dampfsperre**
Hose, in particular brake hose, with integrated water and moisture barrier
Flexible, notamment flexible de frein, doté d'une barrière intégrée contre l'eau et la vapeur

(30) Priorität: 13.05.2009 DE 102009025789
(43) Veröffentlichungstag der Anmeldung: 17.11.2010
(73) Patentinhaber: ContiTech Schlauch GmbH, 30165 Hannover (DE)
(72) Erfinder: Thum, Michael, 34497 Korbach (DE); Altenhein, Klaus, 34513 Waldeck (DE); Brühne, Klaus, 34497 Korbach (DE); Epp, Bernhard, 34477 Twistetal (DE); Koch, Harald, 35110 Frankenau (DE)
(74) Vertreter: Widjaja, Wira

(56) Entgegenhaltungen:
- EP-A1- 0 222 323
- EP-A1- 1 314 924

## Beschreibung

Die Erfindung betrifft einen Schlauch, insbesondere einen Bremsschlauch, mit wenigstens folgenden Schichten:
- einer Innenschicht und Außenschicht aus einem polymeren Werkstoff mit elastischen Eigenschaften;
- einer zwischen der Innenschicht und Außenschicht eingebetteten Verstärkung mit einer ersten Geflechtslage, die der Innenschicht zugewandt ist, und einer zweiten Geflechtslage, die der Außenschicht zugewandt ist; sowie
- zumindest einer Sperrschicht aus einem polymeren Werkstoff, die als Wasser- und Dampfsperre wirkt.

Schläuche zum Transport von Flüssigkeiten, insbesondere von flüchtigen Flüssigkeiten, oder Gasen werden zumeist mit zumindest einer Sperrschicht versehen, wobei im folgenden näher auf den diesbezüglichen Stand der Technik eingegangen wird.

Kältemittelschläuche, insbesondere auf CO₂-Basis, werden mit einer Sperrschicht mit niedriger Permeationsrate ausgestattet. Die Sperrschicht wird dabei insbesondere auf der Innenseite der Innenschicht als "Inliner" angebracht. Diese Sperrschicht besteht aus Kunstharzen (z.B. Phenolharzen) oder aus Folien aus Polyamid (PA) oder einem Copolymer auf Basis von Ethylenvinylalkohol (EVOH). Auch Folienverbundwerkstoffe, beispielsweise ein PA-EVOH-Folienverbund, kommen hier zum Einsatz. Diesbezüglich wird insbesondere auf folgende Literatur verwiesen:
DE 196 08 318 A1
EP 0 294 181 A2
EP 1 020 673 B1
ATZ Automobiltechnische Zeitschrift 98 (1996) 10, Seite 541

Kraftstoffschläuche und Chemikalienschläuche werden ebenfalls mit einer Sperrschicht in Form eines "Inliners" ausgestattet, und zwar insbesondere auf der Basis fluorhaltiger Kunststoffe, wobei Polytetrafluorethylen (PTFE) besonders zu nennen ist. Diesbezüglich wird insbesondere auf folgenden Stand der Technik verwiesen:
DE 10 2008 014 988 A1 (nachveröffentlicht)
EP0826915B1

Desweiteren wird bei Schläuchen häufig eine Zwischenschicht auf Kautschukbasis als Sperrschicht eingesetzt, unter anderem in Kombination mit einer zusätzlichen Sperrschicht aus einem Kunststoff, beispielsweise aus einem Polyethylen (PE), Polyamid (PA) oder Polyvinylchlorid (PVC). Diese Kunststoffschicht wird dabei zwischen der Innenschicht und einer Zwischenschicht mit jeweils elastischen Eigenschaften eingebettet. Diesbezüglich wird insbesondere auf folgenden Stand der Technik verwiesen:
EP 0 668 464 B1
EP 0 999 394 A1

Ein gattungsgemäßer Schlauch kommt bei allen Schläuchen zur Anwendung, die eine Wasser- und Wasserdampfsperre benötigen, insbesondere bei Bremsschläuchen, wobei diesbezüglich insbesondere auf die Offenlegungsschrift WO 2007/120366 A1 Bezug genommen wird. Die Sperrschicht hat hier die Aufgabe, die Wasser- und Wasserdampfdurchlässigkeit von Außen durch den Schlauch zu reduzieren, so dass der Wassergehalt der Bremsflüssigkeit minimiert wird. Dabei besteht die Innen- und Außenschicht aus einer vulkanisierten Kautschukmischung, wobei für die Innenschicht insbesondere ein EPDM/IIR-Verschnitt zum Einsatz gelangt. Die Sperrschicht als Zwischenschicht ist ebenfalls eine vulkanisierte Kautschukmischung, insbesondere auf der Basis von verschnittfreiem EPDM. Die Kautschukkomponente EPDM zeichnet sich durch Witterungsbeständigkeit und durch eine geringe Wasserdurchlässigkeit aus.

Nach der Ausführung des Bremsschlauches nach der Offenlegungsschrift EP 1 314 924 A1, die zugleich den nächst liegenden Stand der Technik darlegt, steht die Sperrschicht mit der ersten und/oder zweiten Geflechtslage in direkter Verbindung, wobei der polymere Werkstoff der Sperrschicht ein Kunststoff ist, der in die Geflechtslücken eindringt und dabei eine mechanische Geflechtsverankerung eingeht. Die Sperrschicht besteht dabei aus einem Gummimaterial mit einer Mooney Viskosität von 10 bis 40 Mv bei 145°C.

Mit dieser Sperrschichtkonzeption auf der oben genannten Elastomerbasis sind jedoch insbesondere folgende Nachteile verbunden, was hiermit anhand von Bremsschläuchen als schwerpunktmäßiger Anwendungsbereich dokumentiert werden soll:
- Bremsschläuche mit einer elastomeren Zwischenschicht erhöhen die Material- und Produktionskosten. Eine derartige Zwischenschicht ist somit in der Herstellung zu teuer. Hinzu kommt, dass in der Produktion nur Längen von bis zu 90 Metern eingesetzt werden können. Dies bedeutet wiederum, dass es durch den häufigen Wechsel der Spulen zu Stillstandszeiten an den Flechtmaschinen kommt und somit die Lohnkosten steigen.
- Die elastomere Zwischenschicht hat eine Mindeststärke von 0,3 mm. Bei kleinen Schläuchen bedingt dies eine Änderung der Konstruktion. Dadurch ändert sich das Verhalten der Bremsschläuche unter Druckbelastung und die Schlauchverstärkung (Armierung) muss angepasst werden.
- Bremsschläuche mit einer Innnenschicht auf der Basis EPDM/IIR lassen sich schlecht armieren, was eine spezielle Armierungsentwicklung erforderlich macht.
- Die Wasser- und Wasserdampfdurchlässigkeit liegt bei mehr als 5 %. Prüfungen haben dabei gezeigt, dass der Wasseranteil in der Bremsflüssigkeit bei Bremsschläuchen bei durchschnittlich 7 % liegt.
- Im Bereich der Armatur treten zudem häufig Probleme auf, da die Ausreißfestigkeit nicht ausreichend ist.

Zwecks Behebung der vorgenannten Nachteile zeichnet sich der erfindungsgemäße Schlauch, insbesondere Bremsschlauch, durch die Merkmale des Anspruchs 1 aus.

Im Folgenden wird auf den Schichtenaufbau näher eingegangen.

### Innenschicht und Außenschicht

Die Innenschicht und Außenschicht besteht aus einem polymeren Werkstoff mit elastischen Eigenschaften, und zwar unter dem Aspekt der Elastizitätsanforderungen an Schläuche. Die beiden Werkstofftypen sind Elastomere und Thermoplastische Elastomere (TPE).

Die Elastomere umfassen eine vulkanisierte thermoplastfreie Kautschukmischung, enthaltend wenigstens eine Kautschukkomponente sowie Mischungsingredienzien. Auf dem Schlauchsektor sind insbesondere als Kautschukkomponenten zu nennen:
Ethylen-Propylen-Kautschuk (EPM)
Ethylen-Propylen-Dien-Kautschuk (EPDM)
Nitrilkautschuk (NBR)
(teil)hydrierter Nitrilkautschuk (HNBR)
Fluor-Kautschuk (FKM)
Chloropren-Kautschuk (CR)
Naturkautschuk (NR)
Styrol-Butadien-Kautschuk (SBR)
Isopren-Kautschuk (IR)
Butylkautschuk (IIR)
Brombutylkautschuk (BIIR)
Chlorbutylkautschuk (CIIR)
Butadien-Kautschuk (BR)
Chloriertes Polyethylen (CM)
Chlorsulfoniertes Polyethylen (CSM)
Polyepichlorhydrin (ECO)
Ethylen-Vinylacetat-Kautschuk (EVA)
Acrylat-Kautschuk (ACM)
Ethylen-Acrylat-Kautschuk (AEM)
Siliconkautschuk (VMQ)
Fluorierter Methylsilikonkautschuk (MFQ)
Perfluorinierter Propylen-Kautschuk (FFPM)
Perfluorcarbon-Kautschuk (FFKM)
Polyurethan (PU)

Die vorgenannten Kautschuktypen können unverschnitten sein. Auch der Einsatz eines Verschnittes, insbesondere in Verbindung mit einem der vorgenannten Kautschuktypen ist möglich.

Von besonderer Bedeutung sind unverschnittenes EPM oder EPDM sowie Verschnitte aus EPM/IIR, EPDM/IIR oder EPM/EPDM, insbesondere für die Innenschicht von Bremsschläuchen.

Im Hintergrund des neuartigen Sperrschichtkonzeptes besteht allerdings die Möglichkeit, für die Innenschicht die Werkstoffvarianten zu erweitern.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente). Diesbezüglich wird auf den allgemeinen Stand der Kautschukmischungstechnologie verwiesen.

Auch TPE-Werkstoffe können eingesetzt werden, die wenigstens eine Thermoplastkomponente, wenigstens eine Kautschukkomponente, die zumindest teilvernetzt ist, sowie Mischungsingredienzien enthalten.

Die bevorzugte Thermoplastkomponente ist Polyethylen (PE), Polypropylen (PP), Polystyrol, Polyamid (PA) oder Polyester (PES).

Als Kautschukkomponenten sind insbesondere EPM oder EPDM, insbesondere in verschnittfreier Ausführung, zu nennen.

Hinsichtlich der Mischungsingredienzien wird auf die oben genannte Mischungstechnologie, insbesondere auf die Lehre gemäß der Offenlegungsschrift DE 100 04 632 A1 verwiesen.

Bei Bremsschläuchen haben jedoch für die Innenschicht und Außenschicht die elastomeren Werkstoffe eine zentrale Bedeutung.

### Verstärkung

Die Verstärkung (Armierung) umfasst eine erste Geflechtslage, die der Innenschicht zugewandt ist, und eine zweite Geflechtslage, die der Außenschicht zugewandt ist. Hinsichtlich der Geflechtslage gibt es dabei folgende zwei Werkstoffvarianten:
- Das Geflecht ist aus einem textilen Werkstoff gebildet. Die diesbezüglichen Werkstoffe können beispielsweise ein Polyamid (PA), ein Aramid, ein Polyester, ein Polyvinylacetal (PVA), ein Polyetheretherketon (PEEK) oder ein Polyphenylen, hier insbesondere ein Polyphenylensulfid (PPS), sein. Auch Hybridkonzepte, beispielsweise in Form eines Mischzwirnes, können zum Einsatz gelangen. Im Rahmen einer neueren Schlauchentwicklung (DE 10 2008 037 417.2) kommt beispielsweise ein Hybridkonzept aus PPS und PA zu Anwendung. Das PPS als Hochleistungswerkstoff trägt zu einer hohen Festigkeit bei, während das PA neben dem Festigkeitsbeitrag auch über seine Haftaktivierbarkeit zu einer verbesserten Haftung gegenüber dem umgebenden elastomeren Werkstoff beiträgt.
- Das Geflecht ist aus Stahldrähten gebildet, insbesondere aus vergüteten, oberflächengeschützten Stahldrähten.

Von besonderer Bedeutung ist ein Geflechtskonzept auf textiler Werkstoffbasis, was bei Bremsschläuchen zumeist auch umgesetzt wird. Bei dem Bremsschlauch nach der Offenlegungsschrift WO 2007/120366 A2 ist das Geflecht insbesondere aus PVA gebildet. Bei dem Bremsschlauch nach der Offenlegungsschrift EP 1 314 924 A1 wird als Geflechtswerkstoff noch Polyester erwähnt.

Die erste und zweite Geflechtslage hinterlassen Geflechtslücken, in die nun das Polyolefin der Sperrschicht eindringt, was im folgenden Kapitel näher erläutert wird.

### Sperrschicht

Die Sperrschicht aus einem Polyolefin steht in direkter Verbindung mit der ersten und/oder zweiten Geflechtslage. Diesbezüglich sind mehrere Varianten möglich, wobei die folgenden Ausführungsformen besonders zweckmäßig sind:
- Der Schlauch weist eine einzige Sperrschicht auf, die zwischen der ersten Geflechtslage und der zweiten Geflechtslage angeordnet ist.
- Der Schlauch weist ebenfalls nur eine einzige Sperrschicht auf, wobei diese jedoch hier zwischen der Innenschicht und der ersten Geflechtlage eingebettet ist.
- Der Schlauch weist zwei Sperrschichten auf, wobei eine erste Sperrschicht zwischen der Innenschicht und der ersten Geflechtslage und eine zweite Sperrschicht zwischen der ersten Geflechtslage und der zweiten Geflechtslage angeordnet sind.

Hinsichtlich der Sperrschicht aus einem Polyolefin sind folgende Werkstoff- und Konstruktionsparameter von Vorteil:
- Die Sperrschicht besitzt eine Stärke von 0,01 mm bis 2 mm, insbesondere von 0,01 mm bis 1 mm, insbesondere wiederum von 0,02 mm bis 0,1 mm.
- Die Sperrschicht besteht aus einem Polyethylen (PE) oder einem Polypropylen (PP). Von besonderer Bedeutung ist ein Polyethylen mit niedriger Dichte (PE-LD). Der Dichtebereich liegt dabei zwischen 0,910 bis 0,940 g/cm³, insbesondere zwischen 0,915 bis 0,930 g/cm³. Hinsichtlich der Wertebereiche von PE-LD und PE-HD wird insbesondere auf die Offenlegungsschrift WO 02/078952 A1 verwiesen.

Eine Versuchsreihe hat dabei gezeigt, dass bei Einsatz einer Folie aus PE-LD hinsichtlich der Aufgabenstellung die besten Ergebnisse erzielt werden, insbesondere bei einem Bremsschlauch.

Dies ist insofern überraschend, da man in Fachkreisen davon ausgegangen ist, dass bei Einsatz einer Folie mit direktem Kontakt zu einer Geflechtslage eine Perforierung der Folie durch die Geflechtsabdrücke gebildet wird, die dann letztlich die Wasser- und Dampfdurchlässigkeit erhöht, somit also als Wasser- und Dampfsperre wenig geeignet wäre. Bedingt durch die üblichen Vulkanisationsbedingungen bei 130 bis 200 °C schmilzt jedoch der Kunststoff und dringt dabei in die Geflechtslücken ein, was zu einer mechanischen Geflechtsverankerung der Folie führt.

Ferner fließt während der Vulkanisation insbesondere der elastomere Werkstoff der Innenschicht, beispielsweise auf der Kautschukbasis EPDM/IIR, durch die Geflechtslücken der ersten Geflechtslage und wird dabei von der Folienschicht aufgenommen. Die dadurch entstehenden etwa 0,01 mm bis 0,05 mm großen Elastomer-Einschlüsse ermöglichen einen geringen Austausch von Wasser und Bremsflüssigkeit innerhalb der Schlauchwand. Dieser Austausch verhindert eine Blasenbildung unter der Folie.

Die geringe Stärke der Sperrschicht ermöglicht zudem ein Spulvolumen von bis zu 500 m. Eine Änderung der der Konstruktion ist nicht erforderlich, da sich der Geflechtsdurchmesser nur geringfügig ändert.

Die Erfindung wird nun anhand von Ausführungsbeispielen unter Bezugnahme auf schematische Zeichnungen erläutert. Es zeigen:
- Fig. 1: einen Bremsschlauch mit einer Sperrschicht zwischen der ersten Geflechtslage und der zweiten Geflechtslage;
- Fig. 2: einen Bremsschlauch mit einer Sperrschicht zwischen der Innenschicht und der zweiten Geflechtslage;
- Fig. 3: ein Textil-Polyolefin-Hybridsystem.

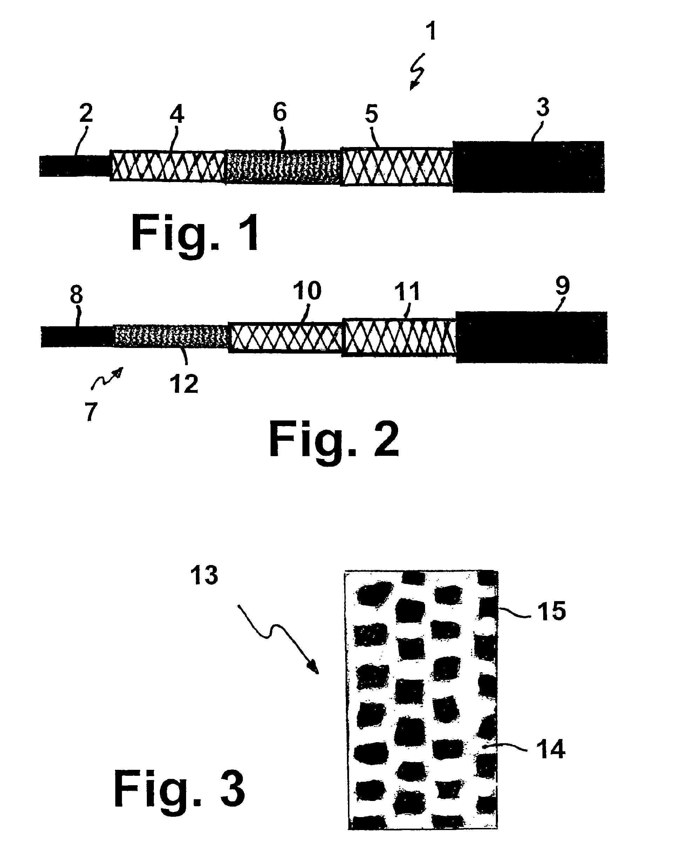

Nach Fig. 1 umfasst der Bremsschlauch 1 eine Innenschicht 2, eine Außenschicht 3 sowie eine erste Geflechtslage 4 und eine zweite Geflechtslage 5. Zwischen diesen beiden Geflechtslagen ist eine Sperrschicht 6 angeordnet, die aus einem Polyolefin besteht, der in die Geflechtslücken eindringt und dabei eine mechanische Geflechtsverankerung innerhalb beider Geflechtslagen 4 und 5 eingeht.

Ein Vergleichsversuch zeigt nun bei einem Schlauchaufbau gemäß Fig. 1 die Unterschiede zwischen einem erfindungsgemäßen Bremsschlauch I und einem Bremsschlauch II gemäß dem Stand der Technik, wobei die wesentlichen Gesichtspunkte in der Tabelle 1, umfassend Schlauchaufbau und Werkstoffe, und in der Tabelle 2, umfassend Prüfergebnisse, festgehalten sind.

**Tabelle 1**

| **Schlauchaufbau** | **Bremsschlauch I** | **Bremsschlauch II** |
|---|---|---|
| Innenschicht | EPDM/IIR | EPDM/IIR |
| Außenschicht | EPDM | EPDM |
| erste Geflechtslage | PVA | PVA |
| zweite Geflechtslage | PVA | PVA |
| Sperrschicht | Folie aus PE-LD (Stärke 0,1 mm) | EPDM (Stärke 0,3 mm) |

**Tabelle 2**

| **Prüfkriterien** | **Bremsschlauch I** | **Bremsschlauch II** |
|---|---|---|
| **Wasserdurchlässigkeit** 70 °C/168 h Vortrocknung 100 °C/24 h | **3,55 %** | **7,0 %** |
| Volumenzunahme bei 200 bar | 0,86 cm³/m | 0,95 cm³/m |
| Berstdruck | 970 bar | 950 bar |
| **Ausreißkraft** | **2595 N** | **2200 N** |
| Trennkraft Innenschicht und erste Geflechtslage | 2,57 N/mm | 2,50 N/mm |
| Trennkraft erste und zweite Geflechtslage | 1,27 N/mm | 1,00 N/mm |
| Trennkraft Außenschicht und zweite Geflechtslage | 2,23 N/mm | 2,20 N/mm |
| Schleudern bis Defekt | > 150 h | - |

Die besonderen Prüfkriterien sind dabei Wasserdurchlässigkeit und die Ausreißkraft, die bei dem erfindungsgemäßen Bremsschlauch I im Vergleich zu dem Bremsschlauch II nach dem Stand der Technik in überraschender Weise wesentliche Verbesserungen bringen. So wird bei dem erfindungsgemäßen Bremsschlauch I die Wasserdurchlässigkeit deutlich verringert. Gleichzeitig bewirkt die neue Sperrschicht eine Erhöhung der Ausreißkraft und zudem eine gleichmäßigere Trennfestigkeit zwischen der ersten und zweiten Geflechtslage.

Fig. 2 zeigt einen Bremsschlauch 7 mit einer Innenschicht 8, einer Außenschicht 9 sowie mit einer ersten Geflechtslage 10 und einer zweiten Geflechtslage 11. Im Unterschied zu dem Ausführungsbeispiel gemäß Fig. 1 ist jedoch hier die Sperrschicht 12 aus einem Polyolefin zwischen der Innenschicht 8 und der ersten Geflechtslage 10 angeordnet.

Eine vergleichende Versuchsdurchführung analog der Schlauchkonzeption gemäß Fig. 1 lieferte im Wesentlichen die gleichen Prüfergebnisse.

Fig. 3 zeigt nun ein Textil-Polyolefin-Hybridsystem 13, das aus dem Geflecht 14, beispielsweise aus PA, und der Sperrschicht 15, beispielsweise aus PE-HD, nach dem Einfließen in die Geflechtslücken gebildet wird, verbunden mit einer mechanischen Verankerung.

### Bezugszeichenliste

### (Teil der Beschreibung)

- 1: Schlauch (Bremsschlauch)
- 2: Innenschicht
- 3: Außenschicht
- 4: erste Geflechtslage
- 5: zweite Geflechtslage
- 6: Sperrschicht
- 7: Schlauch (Bremsschlauch)
- 8: Innenschicht
- 9: Außenschicht
- 10: erste Geflechtslage
- 11: zweite Geflechtslage
- 12: Sperrschicht
- 13: Textil-Kunststoff-Hybridsystem
- 14: Geflecht
- 15: Sperrschicht

## Patentansprüche

1. Schlauch (1, 7) mit wenigstens folgenden Schichten:
- einer Innenschicht (2, 8) und Außenschicht (3, 9) aus einem polymeren Werkstoff mit elastischen Eigenschaften;
- einer zwischen der Innenschicht (2, 8) und der Außenschicht (3, 9) eingebetteten Verstärkung mit einer ersten Geflechtslage (4, 10), die der Innenschicht (2, 8) zugewandt ist, und einer zweiten Geflechtslage (5, 11), die der Außenschicht (3, 9) zugewandt ist; sowie
- zumindest einer Sperrschicht (6, 12, 15) aus einem polymeren Werkstoff, die als Wasser- und Dampfsperre wirkt;
wobei die Sperrschicht (6, 12, 15) mit der ersten und/oder zweiten Geflechtslage (4, 10; 5, 11) in direkter Verbindung steht, wobei der polymere Werkstoff der Sperrschicht (6, 12, 15) ein Kunststoff ist, der in die Geflechtslücken eindringt und dabei eine mechanische Geflechtsverankerung eingeht,
wobei die Sperrschicht (6, 12, 15) aus einem Polyolefin besteht und eine Folie oder ein Film ist, wobei die Folie aus einem verpressten Polyolefin und der Film aus einer Polyolefinlösung gebildet ist, **dadurch gekennzeichnet, dass** das Polyolefin aus einem Polyethylen (PE), einem Polyethylen mit niedriger Dichte (PE-LD) oder einem Polypropylen (PP) besteht.

2. Schlauch nach Anspruch 1, **dadurch gekennzeichnet, dass** der Schlauch (1, 7) eine einzige Sperrschicht (6, 12) aufweist.

3. Schlauch nach Anspruch 2, **dadurch gekennzeichnet, dass** die Sperrschicht (6) zwischen der ersten Geflechtslage (4) und der zweiten Geflechtslage (5) angeordnet ist.

4. Schlauch nach Anspruch 2, **dadurch gekennzeichnet, dass** die Sperrschicht (12) zwischen der Innenschicht (8) und der ersten Geflechtslage (10) angeordnet ist.

5. Schlauch nach Anspruch 1, **dadurch gekennzeichnet, dass** der Schlauch zwei Sperrschichten aufweist.

6. Schlauch nach Anspruch 5, **dadurch gekennzeichnet, dass** eine erste Sperrschicht zwischen der Innenschicht und der ersten Geflechtslage und eine zweite Sperrschicht zwischen der ersten Geflechtslage und der zweiten Geflechtslage angeordnet sind.

7. Schlauch nach einem der Ansprüche 1 bis 6, **dadurch gekennzeichnet, dass** die Sperrschicht (6, 12, 15) eine Stärke von 0,01 mm bis 2 mm besitzt.

8. Bremsschlauch (1, 7) bestehend aus einem Schlauch nach einem der Ansprüche 1 bis 7.

## Claims

1. Hose (1, 7) comprising at least the following layers:
- an inner layer (2, 8) and an outer layer (3, 9) of a polymeric material with elastic properties;
- a reinforcement embedded between the inner layer (2, 8) and the outer layer (3, 9) and comprising a first layer of braiding (4, 10), which is facing the inner layer (2, 8), and a second layer of braiding (5, 11), which is facing the outer layer (3, 9); and also
- at least one barrier layer (6, 12, 15) of a polymeric material, which acts as a water and vapour barrier;
wherein the barrier layer (6, 12, 15) is in direct connection with the first and/or second layers of braiding (4, 10; 5, 11), wherein the polymeric material of the barrier layer (6, 12, 15) is a plastic that penetrates into the gaps in the braiding, and thereby enters into a mechanical anchorage in the braiding, wherein the barrier layer (6, 12, 15) consists of a polyolefin and is a sheet or a film, wherein the sheet is formed from a moulded polyolefin and the film is formed from a polyolefin solution, **characterized in that** the polyolefin consists of a polyethylene (PE), a low-density polyethylene (LDPE) or a polypropylene (PP).

2. Hose according to Claim 1, **characterized in that** the hose (1, 7) has a single barrier layer (6, 12).

3. Hose according to Claim 2, **characterized in that** the barrier layer (6) is arranged between the first layer of braiding (4) and the second layer of braiding (5).

4. Hose according to Claim 2, **characterized in that** the barrier layer (12) is arranged between the inner layer (8) and the first layer of braiding (10).

5. Hose according to Claim 1, **characterized in that** the hose has two barrier layers.

6. Hose according to Claim 5, **characterized in that** a first barrier layer is arranged between the inner layer and the first layer of braiding and a second barrier layer is arranged between the first layer of braiding and the second layer of braiding.

7. Hose according to one of Claims 1 to 6, **characterized in that** the barrier layer (6, 12, 15) has a thickness of 0.01 mm to 2 mm.

8. Brake hose (1, 7) consisting of a hose according to one of Claims 1 to 7.

## Revendications

1. Tuyau flexible (1, 7), comprenant au moins les couches suivantes :
- une couche intérieure (2, 8) et une couche extérieure (3, 9) en un matériau polymère présentant des propriétés élastiques ;
- un renforcement interposé entre la couche intérieure (2, 8) et la couche extérieure (3, 9), comportant une première couche de treillis (4, 10), qui est tournée vers la couche intérieure (2, 8), et une deuxième couche de treillis (5, 11), qui est tournée vers la couche extérieure (3, 9) ; ainsi que
- au moins une couche de barrière (6, 12, 15) en un matériau polymère, qui fait office de barrière contre l'eau et la vapeur ;
dans lequel la couche de barrière (6, 12, 15) est en liaison directe avec la première et/ou la deuxième couche de treillis (4, 10 ; 5, 11), dans lequel le matériau polymère de la couche de barrière (6, 12, 15) est une matière plastique, qui pénètre dans les vides des treillis et qui assure ainsi un ancrage mécanique des treillis, dans lequel la couche de barrière (6, 12, 15) se compose d'une polyoléfine et est une feuille ou un film, dans lequel la feuille est formée en une polyoléfine comprimée et le film est formé en une solution de polyoléfine, **caractérisé en ce que** la polyoléfine se compose d'un polyéthylène (PE), d'un polyéthylène à faible densité (PE-LD) ou d'un polypropylène (PP).

2. Tuyau flexible selon la revendication 1, **caractérisé en ce que** le tuyau flexible (1, 7) présente une seule couche de barrière (6, 12).

3. Tuyau flexible selon la revendication 2, **caractérisé en ce que** la couche de barrière (6) est disposée entre la première couche de treillis (4) et la deuxième couche de treillis (5).

4. Tuyau flexible selon la revendication 2, **caractérisé en ce que** la couche de barrière (12) est disposée entre la couche intérieure (8) et la première couche de treillis (10).

5. Tuyau flexible selon la revendication 1, **caractérisé en ce que** le tuyau flexible présente deux couches de barrière.

6. Tuyau flexible selon la revendication 5, **caractérisé en ce qu'**une première couche de barrière est disposée entre la couche intérieure et la première couche de treillis et une deuxième couche de barrière est disposée entre la première couche de treillis et la deuxième couche de treillis.

7. Tuyau flexible selon l'une quelconque des revendications 1 à 6, **caractérisé en ce que** la couche de barrière (6, 12, 15) présente une épaisseur de 0,01 mm à 2 mm.

8. Tuyau flexible de frein (1, 7), se composant d'un tuyau flexible selon l'une quelconque des revendications 1 à 7.
